# EUROPÄISCHE PATENTSCHRIFT

(11) **EP 2 308 692 B1**
(45) Veröffentlichungstag und Bekanntmachung des Hinweises auf die Patenterteilung: **21.03.2012**
(21) Anmeldenummer: 10174987.7
(22) Anmeldetag: 02.09.2010
(51) Int. Cl.: B60C 1/00, C08K 3/04, C08K 3/36, C08L 7/00, C08L 9/00

(54) **Schwefelvernetzbare Kautschukmischung und Reifen**
Sulphur linkable natural rubber mixture and tyre
Mélange de caoutchouc pouvant être mis en réseau avec du soufre et pneu

(30) Priorität: 07.10.2009 DE 102009044190
(43) Veröffentlichungstag der Anmeldung: 13.04.2011
(73) Patentinhaber: Continental Reifen Deutschland GmbH, 30165 Hannover (DE)
(72) Erfinder: Weber, Christian, 30826, Garbsen (DE); Kramer, Thomas, 31832, Springe (DE); De Riva Perez, Julian, 33203, Gijon (ES); Kölle, Philipp, 30451, Hannover (DE); Saal, Hilkka, 30167, Hannover (DE)
(74) Vertreter: Finger, Karsten

(56) Entgegenhaltungen:
- EP-A1- 0 705 879
- EP-A1- 1 632 527
- EP-A1- 1 820 668
- WO-A1-2009/068392
- DE-A1-102007 060 859
- US-B1- 6 670 416

## Beschreibung

Die Erfindung betrifft eine schwefelvernetzbare Kautschukmischung, insbesondere für Laufstreifen von Reifen. Ferner betrifft die Erfindung einen Reifen, insbesondere einen Nutzfahrzeugreifen, dessen mit der Fahrbahn in Berührung kommender Teil des Laufstreifens zumindest zum Teil aus der mit Schwefel vulkanisierten Kautschukmischung besteht.

Schwefelvernetzbare Kautschukmischungen, die Butadienkautschuk (Polybutadien) enthalten, werden für Laufstreifen von Fahrzeugluftreifen schon seit langem eingesetzt. Dabei ist bekannt, dass Vulkanisate, die auf Kautschukmischungen mit Butadienkautschuk basieren, sich durch einen hohen Abriebwiderstand auszeichnen. Häufig wird Butadienkautschuk daher in Laufstreifenmischungen für Nutzfahrzeugreifen eingesetzt. Besonders bei Einsätzen mit hoher Abriebsschärfe führt die Verwendung von Butadienkautschuk zu einem geringen Abriebvolumen und somit zu höheren Laufleistungen. Man findet daher auch besonders hohe Mengen an Butadienkautschuk in Antriebsachs- und Buslaufstreifenmischungen.

Laufstreifenmischungen für Nutzfahrzeugreifen, die bis zu 30 phr Butadienkautschuk enthalten, sind beispielsweise aus der US 5,718,782 und der WO 2009/068392 A1 bekannt. Die dort beschriebenen Mischungen enthalten auch Kieselsäure, Silan-Kupplungsagenzien, Ruß mit einer DBP-Zahl ≥ 105 cm³/100g Naturkautschuk und Weichmacher. Es werden jedoch keine Mischungen mit mehr als 40 phr Butadienkautschuk offenbart. Dies ist darauf zurückzuführen, dass zu hohe Mengen an Butadienkautschuk den Nassgriff von Reifen mit einem Laufstreifen aus einer derartigen Mischung verschlechtern.

Auch in der DE 10 2007 060 859 A1 werden Kautschukmischungen für Laufstreifen von Fahrzeugluftreifen mit weniger als 40 phr Butadienkautschuk beschrieben.

Weitere Laufstreifenmischungen für Fahrzeugluftreifen sind aus der EP 0 705 879 A1, der US 6,670,416 B1 und der EP 1 632 527 A1 bekannt.

In der EP 1 820 668 A1 werden Reifen mit geschäumten Laufstreifen beschrieben, deren Kautschukmischungen für den geschäumten Laufstreifen mehr als 40 phr Butadienkautschuk, 5 phr Kieselsäure, ein Silan-Kupplungsagenz, 55 phr Ruß des Typs N 134 und 15 phr Weichmacheröl enthält.

Ausgehend von diesem Stand der Technik liegt der Erfindung die Aufgabe zu Grunde, eine Kautschukmischung bereitzustellen, die bei Verwendung für Laufstreifen von Reifen ein verbessertes Abriebverhalten ohne Verschlechterung des Nassgriffs bewirkt und die gute Reißeigenschaften aufweist.

Gelöst wird die Aufgabe durch eine schwefelvernetzbare Kautschukmischung, die
- mehr als 40 phr zumindest eines Butadienkautschuks,
- 4 - 8 phr Kieselsäure,
- zumindest ein Silan-Kupplungsagenz,
- mehr als 50 phr zumindest eines Rußes mit einer DBP-Zahl ≥ 105 cm³ /100g und
- weniger als 6 phr Weichmacheröle und/oder Verarbeitungshilfsmittel enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Es hat sich überraschenderweise herausgestellt, dass der Nassgriffverschlechterung durch einen hohen Anteil an Butadienkautschuk (mehr als 40 phr) durch die spezielle Kombination mit 4-8 8 phr aktivierter Kieselsäure, d. h. über Silan-Kupplunsagenz an das Polymer anbindbarer Kieselsäure, und mehr als 50 phr zumindest eines Rußes mit einer DBP-Zahl ≥ 105 cm³ /100g entgegen gewirkt werden kann. Es gelingt durch das Zusammenspiel von hohem Anteil an Butadienkautschuk mit einem hohen Füllgrad an Ruß und Kieselsäure, das gegensätzliche Verhalten der Eigenschaften Abrieb und Nassgriff bei Butadienkautschukmischungen zu entkoppeln. Der Abrieb während des Fahrbetriebes wird reduziert. Bei höheren Zudosierungen an Kieselsäure (mehr als 8 phr) ergeben sich durch eine erhöhte Viskosität verarbeitungstechnische Probleme, diesen Effekten kann durch gleichzeitige Rußreduzierung entgegengewirkt werden. Dies zieht allerdings wiederum eine Abriebsverschlechterung nach sich.

Gleichzeitig werden die Reißeigenschaften nicht negativ beeinflusst.

Bei dem gemäß der Erfindung eingesetzten Butadienkautschuk kann es sich sowohl um cis-1,4- als auch um Vinyl-Polybutadien (40-90 % Vinyl-Anteil) handeln. Bevorzugt ist die Verwendung von cis-1,4-Polybutadien mit einem cis-1,4-Anteil größer 90 %, welches z. B. durch Lösungspolymerisation in Anwesenheit von Katalysatoren vom Typ der seltenen Erden hergestellt werden kann.

Ein besonders ausgewogenes Verhältnis zwischen Abrieb und Nassgriff lässt sich erzielen, wenn die Mischung 45 - 55 phr zumindest eines Butadienkautschuks enthält.

Als Kieselsäure können die in der Reifenindustrie bekannten Typen eingesetzt werden, wobei auch mehrere verschiedene Kieselsäuretypen eingesetzt werden können. Dabei handelt es sich in der Regel um gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben. Es können beispielsweise Kieselsäuren mit einer Stickstoff-Oberfläche zwischen 120 und 240 m²/g, bevorzugt zwischen 150 und 200 m²/g, und einer CTAB-Oberfläche zwischen 120 und 230 m²/g, bevorzugt zwischen 140 und 200 m²/g, eingesetzt werden.

Zur Anbindung der Kieselsäure an Kautschuk enthält die erfindungsgemäße Mischung zumindest ein Silan-Kupplungsagenz. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Bei dem gemäß der Erfindung eingesetzten Ruß mit einer DBP-Zahl ≥ 105 cm³/100g handelt es sich um einen so genannten Hochstruktur-Ruß, der den Abrieb besonders positiv beeinflusst. Bevorzugt hat der Ruß eine Iodzahl zwischen 80 und 160 g / kg und eine DBP-Zahl zwischen 115 und 160 cm³/100g. Um gleichzeitig eine optimale Verarbeitbarkeit der Mischung zu erzielen, hat es sich als vorteilhaft erweisen, wenn der Ruß in Mengen von 50 - 60 phr eingesetzt wird. Der oder die Ruße können ggf. im Verschnitt auch mit anderen Rußtypen, die auch eine niedrigere DBP-Zahl als 105 cm³/100g aufweisen, eingesetzt werden.

Die schwefelvernetzbare Kautschukmischung enthält neben dem Butadienkautschuk weitere dem Fachmann bekannte Kautschuke, insbesondere solche aus der Gruppe der Dienkautschuke, die mit Schwefel vernetzbar sind. Zu den Dienkautschuken zählen neben Butadienkautschuk alle Kautschuke mit einer ungesättigten Kohlenstoffkette, die sich zumindest teilweise von konjugierten Dienen ableiten. Besonders bevorzugt ist, wenn der weitere Dienkautschuk oder die weiteren Dienkautschuke ausgewählt ist bzw. sind aus der Gruppe, bestehend aus Naturkautschuk (NR), synthetischem Polyisopren (IR) und Styrol-Butadien-Copolymer (SBR). Diese Dienelastomere lassen sich gut zu der erfindungsgemäßen Kautschukmischung verarbeiten und zeigen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 %.

Gemäß einer bevorzugten Weiterbildung der Erfindung enthält die Kautschukmischung mehr als 40 phr, vorzugsweise 45 - 55 phr, Naturkautschuk. Dies bewirkt, dass die Reißeigenschaften der resultierenden Mischung und beim Reifen insbesondere das Chipping-und-Chunking-Verhalten verbessert werden. Dieser Effekt ist besonders bei Nutzfahrzeugreifen von Wichtigkeit, da dieser Reifentyp hohen mechanischen Belastungen ausgesetzt ist und tief gehende Risse das bei Nutzfahrzeugreifen übliche Nachschneiden beeinträchtigen oder gar verhindern können.

Enthält die Kautschukmischung Styrol-Butadien-Copolymer, kann es sich um lösungspolymerisiertes Styrol-Butadien-Copolymer (S-SBR) mit einem Styrolgehalt bezogen auf das Polymer von ca. 10 bis 45 % und einem Vinylgehalt (Gehalt an 1,2-gebundenem Butadien bezogen auf das gesamte Polymer) von 10 bis 70 % handeln, welches zum Beispiel unter Verwendung von Lithiumalkylen in organischem Lösungsmittel hergestellt werden kann. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 % und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk, Ethylen-Propylen-Dien-Kautschuk (EPDM) oder modifizierte Dienkautschuke enthalten. Die modifizierten Dienkautschuke können auf lösungs- oder emulsionpolymerisiertem Styrol-Butadienkautschuk basieren. Bei der Modifizierung kann es sich um solche mit Hydroxylgruppen und/oder Epoxygruppen und/oder Siloxangruppen und/oder Aminogruppen und/oder Aminosiloxan und/oder Carboxylgruppen und/oder Phthalocyaningruppen handeln.

Um die Reißeigenschaften der Mischung nicht negativ zu beeinflussen, enthält die Mischung nicht mehr als 6 phr Weichmacheröl und/oder Verarbeitungshilfsmittel. Für gute Verarbeitbarkeit bei gleichzeitig guten Reißeigenschaften beträgt der Anteil an Weichmacheröl und/oder Verarbeitungshilfsmittel in der Mischung 2 bis 5 phr.

Als Weichmacheröle können beispielsweise solche, ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphtenischem Öl, verwendet werden. Zu den Verarbeitungshilfsmitteln zählen z. B. Harze, Metallseifen, Fettsäuren oder Faktis.

Die Kautschukmischung kann neben den genannten Füllstoffen Ruß und Kieselsäure noch andere Füllstoffe, wie beispielsweise Alumosilicate, Kreide, Stärke, Magnesiumoxid, Titandioxid oder Kautschukgele enthalten.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel und/oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form, vorzugsweise die eines Laufstreifenrohlings, gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Wichtig ist, dass zumindest der mit der Fahrbahn in Berührung kommende Teil des Laufstreifens zumindest zum Teil aus der mit Schwefel vulkanisierten erfindungsgemäßen Kautschukmischung besteht.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäße Mischung ist mit E gekennzeichnet.

Die Mischungsherstellung erfolgte unter üblichen Bedingungen in einem Labortangentialmischer. Es wurden die Mooney-Viskositäten ML (1+4) bei 100 °C mit Hilfe eines rotorlosen Vulkameters (MDR = Moving Disc Rheometer) gemäß DIN 53 523 ermittelt. Aus sämtlichen Mischungen wurden Prüfkörper zum einen durch Präparation aus einem Reifen, zum anderen durch 15-minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
Für die Prüfkörper aus Reifen:
- Shore-A-Härte bei Raumtemperatur und 70 °C gemäß DIN 53 505 an geschichteten Prüfkörpern mit 30 mm Durchmesser und 6 mm Dicke
- Spannungswert (Modul) bei 300 % Dehnung bei Raumtemperatur gemäß DIN 53 504 an S3 Stäben
- Rückprallelastizität bei Raumtemperatur und 70 °C gemäß DIN 53 512 an geschichteten Prüfkörpern mit 30 mm Durchmesser und 6 mm Dicke
Für die Prüfkörper durch Vulkanisation bei 160 °C:
- Abrieb analog Grosch gemäß Grosch, K. A., the 131th ACS Rubber Div. Meeting, No. 97 (1987) und Grosch, K. A. et al. Kautschuk Gummi Kunststoffe, 50, 841 (1997), bei den Angaben der Tabelle handelt es sich um ein Rating, wobei die Werte der Mischung 1(V) gleich 100 gesetzt wurden, Werte größer 100 bedeuten eine Verbesserung des Abriebs (d. h. weniger abgeriebenes Volumen)
- Weiterreißwiderstand bei 100 °C nach Graves gemäß DIN 53515
- Reißenergie pro verformtem Volumen bei Raumtemperatur gemäß High Speed Tear Energy Test nach DIN EN 10 045 (HSTE)

Ferner wurden Reifen der Dimension 315/80 R22,5 HDR+ mit den erfindungsgemäßen Mischungen als Laufstreifen hergestellt und eine subjektive Bewertung der Traktion auf nassem Kopfsteinpflaster vorgenommen, wobei an einem Hügel mit 5 und 7 % Steigung angefahren wird. Die Referenz 1(V) wird auf 0 gesetzt. + (plus) bedeutet eine Verbesserung der Eigenschaft, - (minus) eine Verschlechterung, wobei bei einem minus eine Markttauglichkeit des Reifens deutlich in Frage zu stellen ist.

**Tabelle 1**

| **Bestandteile** | **Einheit** | **1(V)** | **2(V)** | **3(V)** | **4(V)** | **5(E)** |
|---|---|---|---|---|---|---|
| Naturkautschuk | phr | 60 | 63 | 53 | 53 | 53 |
| BR^{a} | phr | 20 | 37 | 47 | 47 | 47 |
| SSBR | phr | 20 | - | - | - | - |
| RußN 121 | phr | 45 | 48 | 52 | 42 | 52 |
| Kieselsäure VN3 | phr | 5 | 8 | 12 | 16 | 6 |
| Silan-Kupplungsag.^{b} | phr | - | 2 | 2,5 | 3 | 1,5 |
| Weichmacher | phr | 3 | 3 | 4 | 4 | 4 |
| Alterungsschutzmittel | phr | 5 | 5 | 5 | 5 | 5 |
| Stearinsäure | phr | 2 | 2 | 2 | 2 | 2 |
| Zinkoxid | phr | 3 | 3 | 3 | 3 | 3 |
| Beschleuniger | phr | 1,3 | 1,6 | 1,6 | 1,7 | 1,5 |
| Schwefel | phr | 1,3 | 1,1 | 0,9 | 0,8 | 1,0 |
| Verzögerer | phr | 0,1 | 0,1 | 0,1 | 0,1 | 0,1 |

| **Eigenschaften** | | | | | | |
|---|---|---|---|---|---|---|
| ML (1+4) bei 100 °C | Mooney-Ein. | 73 | 79 | 101 | 95 | 86 |
| Härte bei RT | ShoreA | 68 | 74 | 75 | 72 | 72 |
| Härte bei 70 °C | ShoreA | 67 | 69 | 71 | 67 | 68 |
| Spannungswert 300 % | MPa | 19 | 22 | 23 | 20 | 21 |
| Rückprallelastizität bei RT | % | 59 | 61 | 56 | 58 | 58 |
| Rückprallelastizität bei 70°C | % | 64 | 66 | 60 | 64 | 63 |
| Abrieb | Rating | 100 | 119 | 158 | 144 | 152 |
| Weiterreißwiderstand | N/mm | 49 | 47 | 44 | 52 | 47 |
| HSTE | MJ/m³ | 5,2 | 4,9 | 4,7 | 5,3 | 5,1 |
| Nasstraktion | subjektiv | 0 | - | 0+ | + | 0/0+ |

| | | | | | | |
|---|---|---|---|---|---|---|
| ^{a}High-cis Polybutadien ^{b}TESPT auf Ruß, 50/50 | | | | | | |

Die Rückprallelastizität bei Raumtemperatur dient als Maß für den Nassgriff bei Verwendung der Mischung als Laufstreifen. Eine niedrigere Rückprallelastizität ist dabei mit einem guten Nassgriff zu korrelieren.

Aus der Tabelle 1 wird ersichtlich, dass durch die spezielle Kombination von mehr als 40 phr Butadienkautschuk mit aktivierter Kieselsäure und einem hohen Anteil an Hochstruktur-Ruß der negative Effekt der Verschlechterung des Nassgriffs bei hohem Butadienkautschukanteil kompensiert werden kann. Gleichzeitig bleibt der positive Effekt des hohen Butadienkautschukanteils, nämlich das gute Abriebverhalten mit niedrigem Abrieb während des Fahrbetriebs erhalten. Die Mischungen 3(V) und 4(V) zeigen die Viskositätszunahme bei höheren Kieselsäuremengen. In Mischung 4(V) wird diesem Effekt durch Rußreduzierung entgegengewirkt, wobei dann aber das Abriebverhalten wieder schlechter wird. Erst die erfindungsgemäße Mischung 5(E) zeigt das verbesserte Abriebverhalten bei gutem Nassgriff, wobei die Mischung gleichzeitig eine Viskosität aufweist, die keine verarbeitungstechnischen Probleme nach sich zieht.

## Patentansprüche

1. Schwefelvernetzbare Kautschukmischung, insbesondere für Laufstreifen von Reifen, enthaltend
- mehr als 40 phr zumindest eines Butadienkautschuks,
- 4-8 phr Kieselsäure,
- zumindest ein Silan-Kupplungsagenz,
- mehr als 50 phr zumindest eines Rußes mit einer DBP-Zahl ≥ 105 cm³ /100g und
- weniger als 6 phr Weichmacheröle und/oder Verarbeitungshilfsmittel.

2. Kautschukmischung nach Anspruch 1, **dadurch gekennzeichnet, dass** sie 45 - 55 phr zumindest eines Butadienkautschuks enthält.

3. Kautschukmischung nach Anspruch 1 oder 2, **dadurch gekennzeichnet, dass** sie 50 - 60 phr zumindest eines Rußes mit einer DBP-Zahl ≥ 105 cm³ /100g enthält.

4. Kautschukmischung nach zumindest einem der vorhergehenden Ansprüche, **dadurch gekennzeichnet, dass** sie mehr als 40 phr Naturkautschuk enthält.

5. Kautschukmischung nach Anspruch 4, **dadurch gekennzeichnet, dass** sie 45 - 55 phr Naturkautschuk enthält

6. Kautschukmischung nach zumindest einem der vorhergehenden Ansprüche, **dadurch gekennzeichnet, dass** sie 2 - 5 phr Weichmacheröle und/oder Verarbeitungshilfsmittel enthält.

7. Reifen, insbesondere Nutzfahrzeugreifen, dessen mit der Fahrbahn in Berührung kommender Teil des Laufstreifens zumindest zum Teil aus einer mit Schwefel vulkanisierten Kautschukmischung nach zumindest einem der Ansprüche 1 bis 6 besteht.

## Claims

1. Sulphur-crosslinkable rubber mixture, in particular for treads of tyres, comprising
- more than 40 phr of at least one butadiene rubber,
- from 4 to 8 phr of silica,
- at least one silane coupling agent,
- more than 50 phr of at least one carbon black with DBP number ≥ 105 cm³/100 g
and
- less than 6 phr of plasticizer oils and/or processing aids.

2. Rubber mixture according to Claim 1, **characterized in that** it comprises from 45 to 55 phr of at least one butadiene rubber.

3. Rubber mixture according to Claim 1 o r 2, **characterized in that** it comprises from 50 to 60 phr of at least one carbon black with DBP number ≥ 105 cm³/100 g.

4. Rubber mixture according to at least one of the preceding claims, **characterized in that** it comprises more than 40 phr of natural rubber.

5. Rubber mixture according to Claim 4, **characterized in that** it comprises from 45 to 55 phr of natural rubber.

6. Rubber mixture according to at least one of the preceding claims, **characterized in that** it comprises from 2 to 5 phr of plasticizer oils and/or processing aids.

7. Tyre, in particular commercial-Vehicle tyre, in which that part of the tread that comes into contact with the trafficway is composed at least to some extent of a sulphur-vulcanized rubber mixture according to at least one of Claims 1 to 6.

## Revendications

1. Mélange de caoutchouc réticulable avec du soufre, notamment pour bandes de roulement de pneus, contenant :
- plus de 40 pce d'au moins un caoutchouc de butadiène,
- 4 à 8 pce de silice,
- au moins un agent de couplage silane,
- plus de 50 pce d'au moins un noir de carbone ayant un indice DBP ≥ 105 cm³/100 g, et
- moins de 6 pce d'huiles plastifiantes et/ou d'adjuvants d'usinage.

2. Mélange de caoutchouc selon la revendication 1, **caractérisé en ce qu'**il contient 45 à 55 pce d'au moins un caoutchouc de butadiène.

3. Mélange de caoutchouc selon la revendication 1 ou 2, **caractérisé en ce qu'**il contient 50 à 60 pce d'au moins un noir de carbone ayant un indice DBP ≥ 105 cm³/100 g.

4. Mélange de caoutchouc selon au moins l'une quelconque des revendications précédentes, **caractérisé en ce qu'**il contient plus de 40 pce de caoutchouc naturel.

5. Mélange de caoutchouc selon la revendication 4, **caractérisé en ce qu'**il contient 45 à 55 pce de caoutchouc naturel.

6. Mélange de caoutchouc selon au moins l'une quelconque des revendications précédentes, **caractérisé en ce qu'**il contient 2 à 5 pce d'huiles plastifiantes et/ou d'adjuvants d'usinage.

7. Pneu, notamment pneu pour utilitaire, dont la partie qui rentre en contact avec la route de la bande de roulement est constituée au moins en partie d'un mélange de caoutchouc vulcanisé avec du soufre selon au moins l'une quelconque des revendications 1 à 6.
